# EUROPÄISCHE PATENTSCHRIFT

(11) **EP 0 883 127 B1**
(45) Veröffentlichungstag und Bekanntmachung des Hinweises auf die Patenterteilung: **30.06.2004**
(21) Anmeldenummer: 98106637.6
(22) Anmeldetag: 09.04.1998
(51) Int. Cl.: G11B 33/02

(54) **Abspielgerät für Aufzeichnungsträger**
Player for a record carrier
Lecteur pour un support d'enregistrement

(30) Priorität: 06.06.1997 DE 19723952
(43) Veröffentlichungstag der Anmeldung: 09.12.1998
(73) Patentinhaber: ROBERT BOSCH GMBH, 70442 Stuttgart (DE)
(72) Erfinder: Kirchhoff, Karsten, 31196 Sehlem (DE); Flohr, Heinrich, 31137 Hildesheim (DE)

(56) Entgegenhaltungen:
- EP-A- 0 307 917
- US-A- 5 345 351
- US-A- 5 371 642
- US-A- 5 590 000

## Beschreibung

### Stand der Technik

Die Erfindung geht von einem Abspielgerät für Aufzeichnungsträger nach der im Oberbegriff des Anspruchs 1 angegebenen Gattung aus. Ein solches Abspielgerät ist aus der US-A-5 371 642 bekannt.

Es ist bereits bekannt, Abspielgeräte für Aufzeichnungsträger, wie z.B. Autoradiogeräte mit integriertem Kassettenrecorder oder CD-Spieler, welche in der Vorderseite eine Öffnung zur Aufnahme eines Aufzeichnungsträgers wie z.B. einer Kassette oder CD aufweisen, mit einer schwenkbaren Klappe zur Abdeckung der Öffnung zu versehen. Durch die Klappe wird einerseits die in dem Gerät angeordnete Abspieleinheit vor dem Eindringen von Staub und Schmutz durch die Aufnahmeöffnung geschützt und andererseits erreicht, daß der in der Vorderseite des Gerätegehäuses für die Aufnahmeöffnung benötigte Platz für die Unterbringung von Bedienelementen und Anzeigevorrichtungen auf der Frontseite der Klappe genutzt werden kann. Die schwenkbare Klappe ermöglicht es, insbesondere in kleinen, kompakten Autoradiogeräten mit integriertem Kassetten- oder CD-Teil, zahlreiche Bedienelemente und vergrößerte Anzeigevorrichtungen, wie z.B. ein größeres LCD-Display, auf der dem Betrachter zugewandten Frontseite der Klappe unterzubringen. Als nachteilig bei den bisher bekannten Abspielgeräten muß jedoch der für die Klappe verwandte Schwenkmechanismus angesehen werden. So wird bei den bekannten Abspielgeräten die Klappe z.B. über eine an der Unterseite des Gerätegehäuses im vorderseitigen Bereich vorgesehene Schwenkachse an dem Gerät befestigt. Durch Betätigung einer Drucktaste wird die Klappe entriegelt und klappt durch die Druckkraft einer Feder nach unten, so daß die Frontseite der Klappe dem Betrachter im geöffneten Zustand nicht mehr zugewandt ist. Bei geöffneter Klappe kann daher nur eine Kassette oder CD in das Abspielgerät eingeschoben werden. Es ist aber nicht möglich, auf der Klappe angeordnete Bedienelemente zu betätigen oder Informationen von einem auf der Frontseite plazierten LCD-Display abzulesen.

Weiterhin sind Lösungen bekannt, bei denen an Stelle einer mit einem mechanischen Schwenkmechanismus versehenen Klappe eine mittels eines elektrisch betriebenen Motors aus der Vorderseite des Gerätegehäuses herausfahrbare Abdeckkappe verwandt wird, deren Frontseite im geöffneten Zustand dem Betrachter zugewandt bleibt. Derartige Lösungen sind aber äußerst aufwendig und verteuern die Herstellungskosten erheblich. Darüber hinaus sind derartige Abspielgeräte aufgrund des zusätzlich darin angeordneten Stellmotors zu groß und schwer, als daß sie für den Einsatz von in Kraftfahrzeugen eingebauten Abspielgeräten geeignet wären.

### Vorteile der Erfindung

Das erfindungsgemäße Abspielgerät mit den kennzeichnenden Merkmalen des Anspruchs 1 hat demgegenüber den Vorteil, daß die Klappe über einen aus wenigen einfachen und preiswerten Bauteilen bestehenden, mechanischen Schwenkmechanismus geöffnet und geschlossen wird. Vorteilhaft bleibt die Frontseite der Klappe auch im geöffneten Zustand, in dem ein Aufzeichnungsträger in die dafür vorgesehene Öffnung eingeschoben werden kann, für den Betrachter sichtbar. So bleibt z.B. ein auf der Frontseite der Klappe angeordnetes LCD-Display weiterhin ablesbar, und auf der Frontseite vorgesehene Programm- oder Funktionstasten können auch bei geöffneter Klappe betätigt werden. Vorteilhaft ist weiterhin, daß die Anordnung der Klappe an der Vorderseite des Abspielgerätes über wenigstens einen mit zwei Gelenken verbundenen Hebel nur wenig Platz und Gewicht beansprucht. Ein zusätzlicher Motor mit Umschaltelektronik, wie bei den motorbetriebenen beweglichen Frontkappen ist nicht erforderlich.

Weitere vorteilhafte Ausbildungen und Weiterentwicklungen der Erfindung werden durch die in den Unteranprüchen angegebenen Merkmale ermöglicht. So ist es besonders einfach und kostengünstig, zur Steuerung der Bewegung der Klappe um das zweite Drehgelenk eine Kulissen- oder Hebelführung zu verwenden, die mit einem an der Klappe vorgesehenen dritten Gelenk zusammenwirkt, wobei das dritte Gelenk beim Öffnen der Klappe an der Vorderseite des Gehäuses entlang nach unten geführt wird.

Besonders einfach herzustellen ist ein Ausführungsbeispiel, bei dem zur Steuerung der Bewegung der Klappe wenigstens ein seitlich von einer Seitenwand der Klappe abstehender Zapfen vorgesehen ist, der in eine im vorderseitigen Bereich des Gehäuses vorgesehene Kulisse eingreift.

In einem zweiten Ausführungsbeispiel wird zur Steuerung der Bewegung der Klappe ein zweiter Hebel verwandt, der an seinem einen Ende über das dritte Gelenk mit der Klappe verbunden ist und der an seinem anderen Ende um ein an dem Gehäuse vorgesehenes, viertes Gelenk schwenkbar gelagert ist, wobei das vierte Gelenk unterhalb des dritten Gelenks angeordnet ist. Vorteilhaft wird hierdurch erreicht, daß die Klappe beim Öffnen zuerst mit ihrer Unterseite ein Stück von der Vorderseite des Gehäuses wegschwenkt und erst anschließend nach unten geschwenkt wird, so daß eine Kollision mit einer durch eine Ausnehmung der Klappe in das Gerät eingeschobenen Keycard vermieden wird.

Vorteilhaft ist weiterhin, wenn die Klappe beim Schießen gegen die Spannkraft einer Feder an der Vorderseite des Gerätegehäuses arretierbar ist. Auf einfache Weise kann so ein halbautomatischer Schwenkmechanismus hergestellt werden, bei dem sich die Klappe auf Tastendruck automatisch öffnet und von Hand geschlossen wird. Dies kann vorteilhaft durch wenigstens eine auf einen Hebel des Schwenkmechanismus einwirkende Feder erreicht werden. In einem Ausführungsbeispiel ist vorgesehen, die Feder auf ein mit dem wenigstens einen Hebel verbundenes Stangenteil einwirken zu lassen, das verschiebbar in dem Gehäuse gelagert ist.

Vorteilhaft ist es, einen Verriegelungsmechanismus zur Arretierung der Klappe im geschlossenen Zustand vorzusehen, welcher einfach und preisgünstig durch einen federnden Rasthaken an der Vorderseite des Gerätegehäuses hergestellt werden kann, der beim Schließen der Klappe in eine an der Rückseite der Klappe vorgesehene Ausnehmung eingreift. Zur Lösung der Arretierung ist eine mit einem auf den Rasthaken einwirkenden Betätigungsmittel verbundene, an der Frontseite der Klappe angeordnete Drucktaste vorgesehen.

In einem weiteren Ausführungsbeispiel ist vorgesehen, das eine Ende des mit dem wenigstens einen Hebel verbundenen Stangenteils mit einem Rastmittel zu versehen, das in ein an einem Sperrglied vorgesehenes weiteres Rastmittel eingreift. Das Sperrglied ist elastisch federnd an dem Gehäuse befestigt. Über einen Schalter wird ein Elektromagnet betätigt, der auf einfache Weise ein Anziehen des Sperrglieds und eine Freigabe des Stangenteils bewirkt, so daß sich die Klappe durch die Federspannkraft automatisch öffnet.

### Zeichnung

Ausführungsbeispiele der Erfindung sind in der Zeichnung dargestellt und werden in der nachfolgenden Beschreibung näher erläutert. Es zeigt
Fig. 1 eine Teilansicht eines Querschnitts durch ein erstes Ausführungsbeispiel des erfindungsgemäßen Abspielgerätes,
Fig. 2 eine Teilansicht eines Querschnitts durch ein zweites Ausführungsbeispiel des erfindungsgemäßen Abspielgerätes bei geschlossener Klappe,
Fig. 3 das Ausführungsbeispiel aus Fig. 2 in einer ersten Phase der Klappenbewegung beim Öffnen,
Fig. 4 das Ausführungsbeispiel aus Fig. 2 bei völlig geöffneter Klappe,
Fig. 5 eine Teilansicht des Ausführungsbeispiels aus Fig. 2, welches in vergrößerter Darstellung einen Verriegelungsmechanismus zeigt.

### Beschreibung der Ausführungsbeispiele

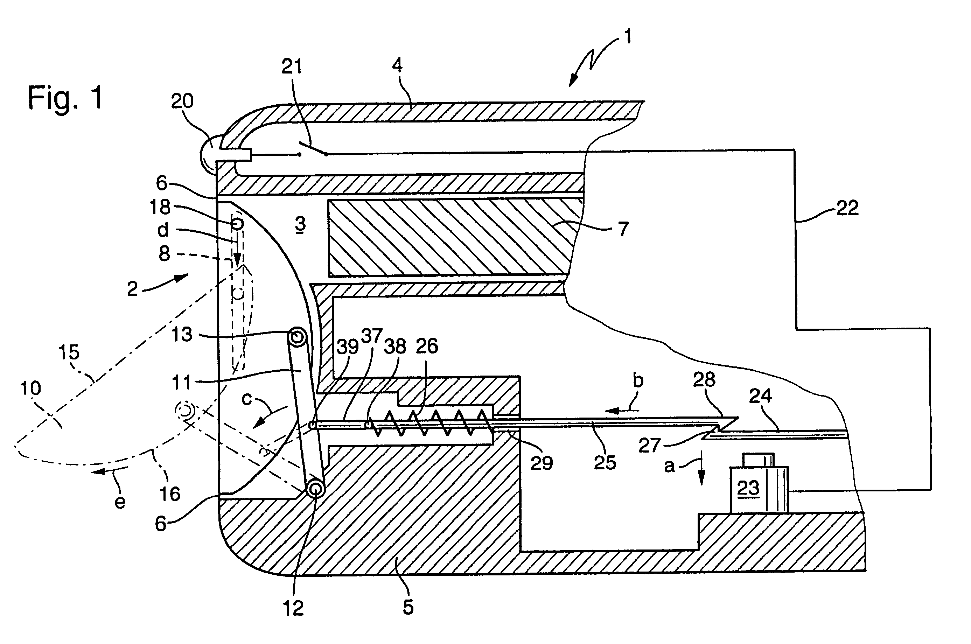

Fig. 1 zeigt einen Ausschnitt eines Querschnitts durch ein Abspielgerät für Aufzeichnungsträger. Das Abspielgerät kann z.B. ein Autoradiogerät mit integriertem Kassettenrecorder oder CD-Spieler sein, welches ein etwa quaderförmiges Gehäuse 1 mit einer Oberseite 4, einer Unterseite 5, zwei Seitenwänden, einer nicht dargestellten Rückseite sowie einer Vorderseite 2 aufweist. Das Gehäuse 1 wird in die Konsole eines Kraftfahrzeuges derart eingebaut, daß die Vorderseite 2 des Gehäuses dem Fahrzeuginnenraum zugewandt ist. In der Vorderseite 2 ist eine schlitzartige Öffnung 3 vorgesehen, welche zur Aufnahme eines Aufzeichnungsträgers 7, wie z.B. einer Audio-Kassette oder einer CD (Compact Disc) dient. Weiterhin ist eine Klappe 10 vorgesehen, welche im geschlossenen Zustand die Öffnung 3 abdeckt. In dem hier gezeigten Ausführungsbeispiel ist in der Vorderseite 2 des Gehäuses 1 eine von einem rechteckigen Rand begrenzte Ausnehmung 6 vorgesehen, in der die Klappe 10 derart angeordnet ist, daß ihre Frontseite 15 in geschlossenem Zustand (durchgezogene Linie) bündig mit der Vorderseite 2 des Gehäuses 1 abschließt und dadurch die im rückwärtigen oberen Bereich der Ausnehmung 6 angeordnete Aufnahmeöffnung 3 abdeckt. Es sind aber auch andere Ausführungsbeispiele möglich, bei denen die Klappe 10 die gesamte Vorderseite 2 des Gehäuses 1 überdeckt. Um beim Schwenken ein Verkanten der Klappe 10 am Rand der Ausnehmung 6 zu vermeiden, ist die Rückseite 16 der Klappe 10, wie in Fig. 1 dargestellt, konvex zum Geräteinneren hin gekrümmt. Auf der Frontseite 15 der Klappe 10 befindet sich ein in Fig. 1 nicht dargestelltes LCD-Display, das für den Benutzer auch im geöffneten Zustand der Klappe 10 sichtbar bleiben soll. Weiterhin ist ein halbautomatischer Schwenkmechanismus vorgesehen, über den die Klappe 10 geöffnet und geschlossen wird. Der Schwenkmechanismus umfaßt einen Hebel 11, der mit dem Gehäuse 1 verbunden ist. Es ist auch denkbar, die Klappe über zwei oder mehr Hebel mit dem Gehäuse zu verbinden. Der Hebel 11 weist an seinem einen Ende ein erstes Drehgelenk 12 auf, das in dem von der Öffnung 3 abgewandten und der Unterseite 5 des Gehäuses 1 zugewandten Bereich der Ausnehmung 6 mit dem Gehäuse 1 derart verbunden ist, daß der Hebel 11 schwenkbar an dem Gehäuse angeordnet ist. An seinem anderen nach außen schwenkbaren Ende, das im geschlossenen Zustand der Klappe zur Oberseite 4 gerichtet ist, weist der Hebel 11 ein mit der Klappe 10 verbundenes, zweites Drehgelenk 13 auf, dessen Drehachse parallel zur Drehachse des ersten Drehgelenks verläuft. Das zweite Drehgelenk 13 ist im Querschnitt etwa auf halber Höhe im Bereich der Rückseite 16 der Klappe 10 angeordnet. Weiterhin weist die Klappe 10 an ihren Seitenwänden im oberen Bereich zwei senkrecht von den Seitenwänden abstehende Zapfen 18 auf, die parallel zur Drehachse des ersten Drehgelenks 12 verlaufen. Die Zapfen 18 greifen in je eine an dem Gehäuse 1 vorgesehene Kulissenführung 8 ein, die in jeweils einem Seitenbereich der Ausnehmung 6 eingelassen ist. Durch das Eingreifen der Zapfen 18 in die Kulissenführungen 8 wird jeweils ein weiteres, drittes Drehgelenk gebildet. In dem hier dargestellten Ausführungsbeispiel besteht die Kulissenführung 8 aus je einer Nut, die, wie in Fig. 1 dargestellt (punktierte Linie), parallel zur Vorderseite 2 des Gehäuses 1 verläuft. Weiterhin ist im rückwärtigen Bereich der Ausnehmung 6 eine Führung 29 für ein Stangenteil 25 vorgesehen. Das Stangenteil 25 ist in der Führung 29 senkrecht zur Vorderseite 2 des Gehäuses verschiebbar gelagert und weist ein der Klappe 10 zugewandtes Ende und ein dem Geräteinneren zugewandtes Ende 28 auf. An dem der Klappe 10 zugewandten Ende des Stangenteils 25 ist ein Drehgelenk 38 vorgesehen, welches mit einem Ende eines Schwenkarms 37 verbunden ist, dessen anderes Ende über ein weiteres Drehgelenk 39 mit dem Hebels 11 verbunden ist. Weiterhin ist eine Spiralfeder 26 vorgesehen, die im vorderseitigen Bereich des Gehäuses 1 um das Stangenteil 25 herum angeordnet ist und sich mit einem Ende gegen ein Gehäuseteil abstützt. Das andere Ende ist in der Nähe des Drehgelenkes 38 mit dem Stangenteil verbunden. Im geschlossenen Zustand der Klappe 10 ist die Feder 26 vorgespannt. Das dem Gehäuseinneren zugewandte Ende des Stangenteils 25 ist mit einem Rasthaken 28 versehen, der mit einem weiteren, an einem Sperrglied 24 angeordneten Rasthaken 27 zusammenwirkt. Das Sperrglied 24 ist mit seinem dem Rasthaken 27 gegenüberliegenden Ende elastisch federnd an dem Gehäuse 1 festgelegt und besteht aus einem Material, das von einem eingeschalteten Elektromagneten angezogen wird. In der Nähe des Sperrglieds 24 ist ein Elektromagnet 23 an dem Gehäuse 1 angeordnet, der über eine elektrische Verbindung 22 mit einem Schalter 21 verbunden ist. Durch eine Drucktaste 20 an der Vorderseite 2 des Gehäuses 1 wird der Schalter 21 betätigt.

Der halbautomatische Schwenkmechanismus wird folgendermaßen benutzt. Im geschlossenen Zustand der Klappe 10 wird die Drucktaste 20 betätigt, woraufhin über den Schalter 21 und die Leitungsverbindung 22 der Elektromagnet 23 eingeschaltet wird. Durch das eingeschaltete magnetische Feld wird das Sperrglied 24 in Richtung des Pfeils a bewegt und dadurch der Rasthaken 27 aus dem Rasthaken 28 ausgehakt und die Arretierung der Klappe gelöst. Das Stangenteil 25 ist nun in der Führung 29 frei beweglich und verschiebt sich bedingt durch die Druckkraft der Feder 26 gegen den Hebel 11 in Richtung des Pfeils b in Fig. 1. Der Hebel 11 wird durch die Druckkraft in Richtung des Pfeils c um das erste Drehgelenk 12 geschwenkt. Gleichzeitig wird der Schwenkarm 37 um das Drehgelenk 38 geschwenkt, wodurch ein Verkanten des Stangenteils 25 verhindert wird. Durch das Schwenken des Hebels 11 wird zunächst der untere Teil der Klappe 10 von der Vorderseite 2 des Gerätes weggeschwenkt. Gleichzeitig gleitet jeder der beiden Zapfen 18 in der zugehörigen Kulisse 8 in Richtung des Pfeils d nach unten. Die Klappe 10 dreht sich dabei um das zweite Drehgelenk 13 und den Zapfen 18 in Richtung des Pfeils e und vollführt eine sowohl drehende als auch an der Vorderseite 2 des Gehäuses abwärts gerichtete Bewegung. Durch den mit der Kulissenführung 8 zusammenwirkenden Zapfen 18 wird vorteilhaft erreicht, daß die Drehbewegung der Klappe 10 um das zweite Drehgelenk 13 derart gesteuert wird, daß das auf der Frontseite 15 der Klappe vorgesehene LCD-Display auch im geöffneten Zustand der Klappe (strichpunktierte Linie) für den Betrachter ablesbar bleibt. Durch die spezielle Bewegung der Klappe 10 wird die Öffnung 3 im oberen Teil der Ausnehmung 6 freigegeben, so daß ein Aufzeichnungsträger 7 entnommen oder eingeschoben werden kann. Das Schließen der Klappe erfolgt manuell. Durch Fingerdruck gegen die nach außen geschwenkte Unterseite der Klappe 10 wird diese entgegen der Richtung des Pfeils e zurückgeschwenkt. Dabei wird das mit dem zweiten Drehgelenk 13 versehene Ende des Hebels 11 in die Ausnehmung 6 zurückgeschwenkt und über das Stangenteil 25 die Feder 26 vorgespannt. Im zurückgeschwenkten Zustand der Klappe greift der Rasthaken 27 des elastisch federnden Sperrglieds 24 in den Rasthaken 28 ein, wodurch die Klappe an der Vorderseite 2 des Gehäuses arretiert wird. Um eine langsame, gleichmäßige Bewegung der Klappe beim Öffnen zu erreichen, kann außerdem ein Dämpfungselement, wie z.B. eine Viskositätsbremse vorgesehen sein.

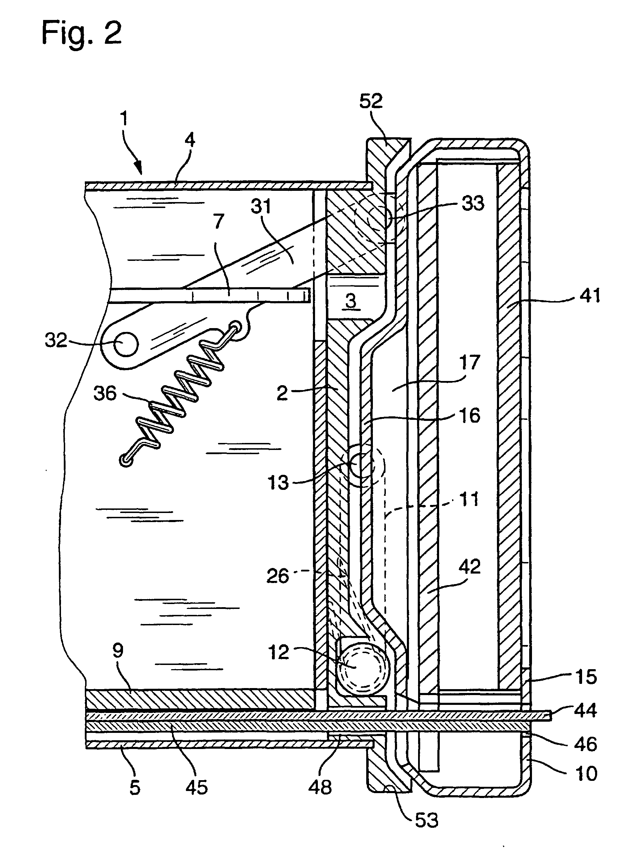

Ein zweites Ausführungsbeispiel der Erfindung ist in den Figuren 2 bis 5 dargestellt. Das zweite Ausführungsbeispiel unterscheidet sich von dem in Fig. 1 dargestellten Ausführungsbeispiel im wesentlichen dadurch, daß an Stelle der Kulissenführung zur Steuerung der Bewegung der Klappe 10 um das zweite Drehgelenk 13 eine Hebelführung verwandt wird. Fig. 2 zeigt im Querschnitt den vorderen Bereich eines Abspielgerätes, z.B. eines Autoradiogerätes mit integriertem CD-Spieler, mit einem quaderförmigen Gehäuse 1, von dem in Fig. 2 eine Oberseite 4, eine Unterseite 5 und eine Vorderseite 2 dargestellt ist. In dem Gehäuse 1 befindet sich eine parallel zur Unterseite in einem Abstand verlaufende Hauptplatte 9, auf der z.B. die Abspieleinheit des Gerätes montiert ist. Zwischen Hauptplatte 9 und Unterseite 5 ist ein schmaler Schlitz zur Aufnahme einer Keycard 44 vorgesehen, die durch eine Öffnung 48 in der Vorderseite 2 auf einen Keycard-Schlitten 45 aufgeschoben wird. Keycard und Keycard-Schlitten stehen ein Stück senkrecht von der Vorderseite 2 des Gehäuses ab. Die Vorderseite 2 weist weiterhin einen über die Gehäuseabmessungen hinausragenden oberen Flansch 52 und einen unteren Flansch 53 auf, die beim Einschieben des Abspielgerätes in eine Fahrzeugkonsole als Anschlag dienen.

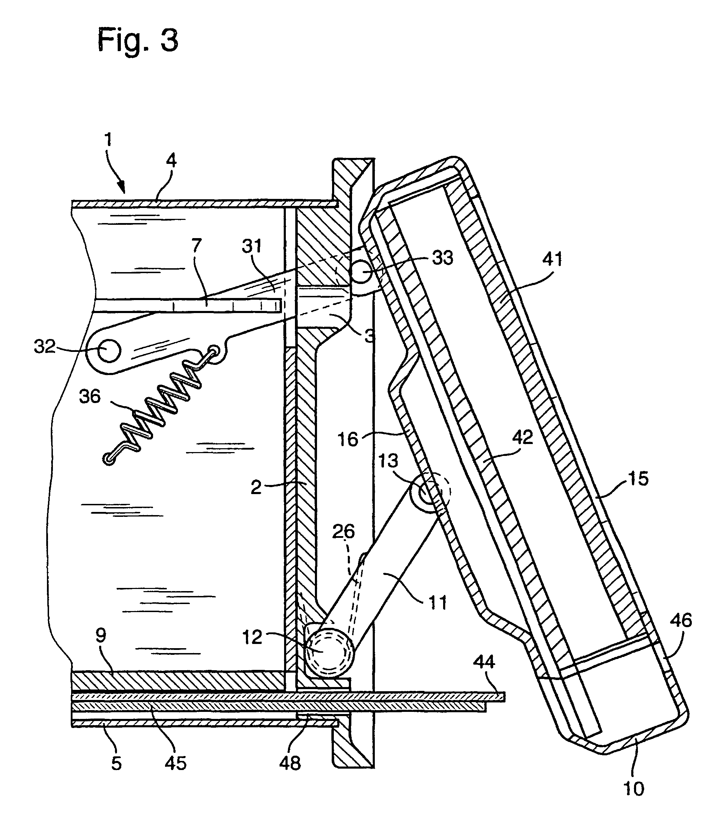

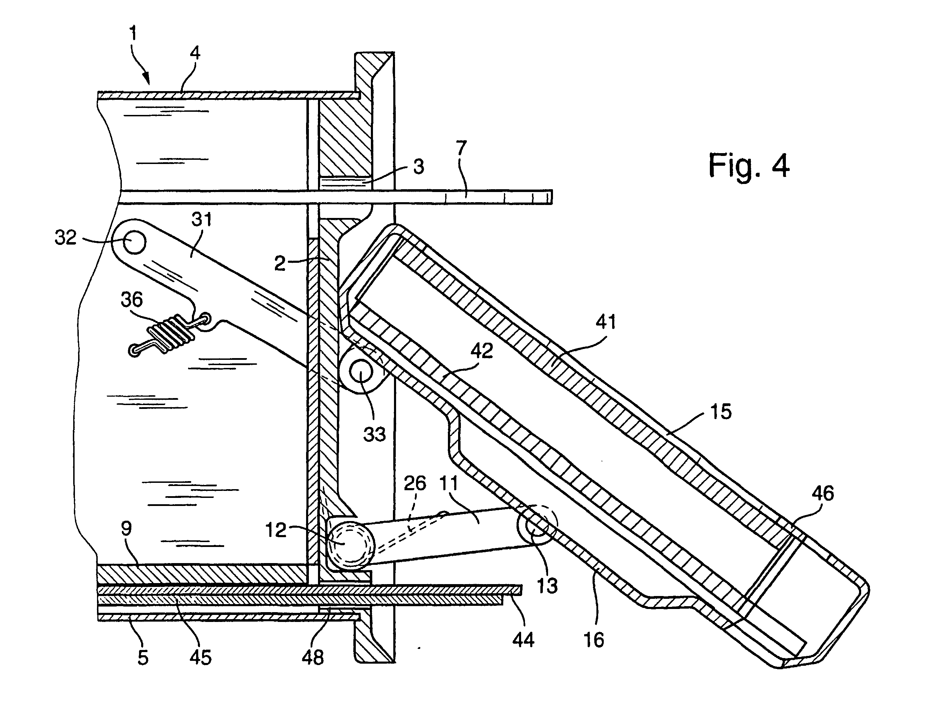

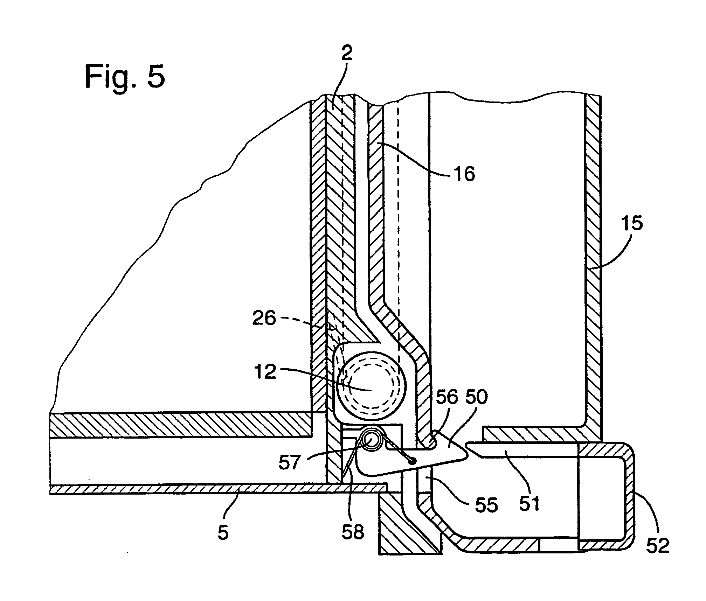

Im oberen Teil der Vorderseite 2 befindet sich eine Öffnung 3 zur Einführung eines Aufzeichnungsträgers 7, beispielsweise einer CD. In dem hier gezeigten Ausführungsbeispiel wird, anders als in dem Beispiel aus Fig. 1 die gesamte Vorderseite 2 von der Klappe 10 im geschlossenen Zustand abgedeckt, wobei die Klappe 10 mit dem oberen Flansch 52 und dem unteren Flansch 53 bündig abschließt. Die Klappe weist einen im wesentlichen rechteckigen Querschnitt mit einer Frontseite 15 und einer Rückseite 16 auf. An der Frontseite 15 ist ein großflächiges LCD-Display 41 angeordnet. Außerdem können sich noch weitere in der Fig. 2 nicht dargestellte Bedienelemente, wie z.B. Funktions- oder Programmtasten oder eine CD-Auswurftaste auf der Frontseite 15 der Klappe 10 befinden. Die der Vorderseite 2 im geschlossenen Zustand zugewandte Rückseite 16 der Klappe 10 weist einen zur Vorderseite 2 des Gehäuses 1 hin gewölbten Abschnitt 17 auf. Im rückwärtigen Teil der Klappe 10 ist eine Leiterplatte 42 angeordnet, auf der sich Schaltungsteile und elektronische Bauelemente befinden. Die elektrischen Verbindungen sind über nicht dargestellte Leitungsverbindungen von der Klappe ins Gehäuseinnere geführt. Vorteilhaft können größere Bauelemente im Bereich des gewölbten Abschnitts 17 auf der Leiterplatte 42 angeordnet werden. Im unteren Bereich der Klappe 10 befindet sich eine von der Rückseite 16 zur Frontseite 15 durchgehende Öffnung 46, durch welche die Keycard im geschlossenen Zustand der Klappe 10 in die Öffnung 48 des Gehäuses 1 eingeschoben wird. Weiterhin ist die Klappe 10 über zwei erste Hebel 11, mit der Vorderseite 2 des Gehäuses 1 verbunden. Die beiden ersten Hebel 11 sind in den äußeren seitlichen Bereichen der Klappe 10 angeordnet. Es ist aber auch möglich nur einen ersten Hebel 11 vorzusehen. Fig. 3 zeigt die Klappe in einer ersten Phase der Schwenkbewegung beim Öffnen. Jeder der beiden Hebel 11 ist über ein im unteren Bereich der Vorderseite 2 des Gehäuses angeordnetes erstes Drehgelenk 12 schwenkbar gelagert. Das Drehgelenk 12 weist eine Achse aus Zinkdruckguß auf, die mit einem nicht dargestellten Dämpfungselement verbunden sein kann. Zur Dämpfung wird eine an sich bekannte Reibkupplung mit einem vorbestimmten Drehmoment verwandt, wodurch ein gleichmäßiger und langsamer Anlauf beim Öffnen der Klappe erreicht wird. In der Querschnittsdarstellung von Fig. 3 ist nur der hintere erste Hebel 11 zu erkennen. An dem von dem Drehgelenk 12 abgewandten Ende jedes ersten Hebels 11 befindet sich je ein zweites Drehgelenk 13, dessen Drehachse parallel zur Drehachse des ersten Drehgelenks 12 verläuft. Jedes zweite Drehgelenk 13 ist zwischen der Oberseite und der Unterseite der Klappe 10 auf halber Höhe an der Rückseite 16 der Klappe befestigt. Außerdem ist je eine Schenkelfeder 26 vorgesehen, die sich mit einem Schenkel gegen die Vorderseite 2 abstützt und deren anderer Schenkel gegen den jeweiligen ersten Hebel 11 im geschlossenen Zustand der Klappe vorgespannt ist. Im oberen Bereich der Rückseite 16 der Klappe 10 ist in jedem Seitenbereich der Klappe jeweils ein drittes Drehgelenk 33 angeordnet, daß mit je einem zweiten Hebel 31 verbunden ist. Jeder der zweiten Hebel 31 ist um ein viertes Drehgelenk 32 schwenkbar an dem Gehäuse 1 befestigt. Das vierte Drehgelenk 32 ist im geschlossenen Zustand der Klappe 10 (Fig. 2) oberhalb des zweiten Drehgelenk 13 und unterhalb des dritten Drehgelenks 33 angeordnet. Durch die beiden zweiten Hebel 31 wird die Bewegung der Klappe 10 um die Drehachse 13 beim Öffnen und Schließen derart gesteuert, daß die Frontseite 15 der Klappe automatisch eine Ausrichtung erfährt, in der das LCD-Display 41 weiterhin ablesbar ist. In der in Fig. 3 dargestellten Bewegungsphase schwenkt die Klappe 10 durch die Spannkraft der Schenkelfedern 26 mit der Unterseite zunächst von der Vorderseite 2 des Gehäuses weg. Dabei dreht sich die Klappe überwiegend um das dritte Drehgelenk 33. Hierdurch wird vorteilhaft erreicht, daß die Keycard 44 nicht in der Öffnung 46 verkantet. In einer zweiten Phase der Bewegung schwenken dann die beiden zweiten Hebel 31 um das vierte Drehgelenk 32 stärker nach unten, wodurch die Klappe 10 an der Vorderseite stärker abgesenkt wird und die Öffnung 3 freigibt. Im geöffneten Zustand der Klappe 10, der in Fig. 4 gezeigt ist, kann der Aufzeichnungsträger 7 aus der Öffnung 3 entnommen werden. Hierzu kann eine Auswurftaste an der Frontseite 15 der Klappe angeordnet sein. Weiterhin sind weitere Federn 36 vorgesehen, deren eines Ende mit dem jeweils zweiten Hebel 31 verbunden ist und deren anderes Ende mit einem Gehäuseteil verbunden ist. Die zweiten Federn üben eine Spannkraft auf den Hebel 31 aus, so daß die Klappe 10 beim Öffnen durch die Vorspannung der Federn 31 und 26 geschwenkt wird. Die Federspannkraft der beiden Federn 31 und 26 kann unterschiedlich ausgelegt werden. Beispielsweise kann die Spannkraft der Feder 31 schwächer sein als die Spannkraft der Feder 26. Hierdurch kann vorteilhaft erreicht werden, daß in einer ersten Phase der Klappenbewegung beim Öffnen die antreibende Feder die Schenkelfeder 26 ist, während in der letzten Phase der Klappenbewegung die antreibende Feder eher die Spiralfeder 36 ist. Beim Schließen der Klappe 10 mit der Hand muß dann zunächst nur der geringe Widerstand der Feder 36 überwunden werden, während in der letzten Phase der Schließbewegung die stärkere Feder 26 vorgespannt wird. Im geschlossenen Zustand wird die Klappe 10 durch den in Fig. 5 gezeigten Verriegelungsmechanismus arretiert. Ein Betätigen der Drucktaste 52 bewirkt, daß der als Betätigungsmittel vorgesehene Steg 51 einen federnden Rasthaken 50, der am Rand 56 einer Ausnehmung 55 an der Rückseite 16 der Klappe 10 eingerastet ist, nach unten drückt und die Klappe 10 dadurch freigibt. Beim Schließen der Klappe 10 drückt der obere Rand 56 der Ausnehmung 55 den Rasthaken 50 zunächst nach unten. Beim weiteren Andrücken der Klappe 10 greift der Rasthaken 50 in die Ausnehmung 55 ein, bis er hinter dem Rand 56 einschnappt. Der Rasthaken 50 kann aus einem elastisch federnden Material gefertigt sein und von der Vorderseite 2 des Gehäuses abstehen oder über eine Schenkelfeder 58, wie in Fig. 5 gezeigt, an einem weiteren Drehgelenk 57 federelastisch befestigt sein.

## Patentansprüche

1. Abspielgerät für Aufzeichnungsträger, umfassend ein Gehäuse (1) mit einer Vorderseite (2), in der eine Öffnung (3) vorgesehen ist, in die ein Aufzeichnungsträger (7) einführbar ist, wobei die Öffnung durch eine schwenkbare, mit einer Frontseite (15) versehenen Klappe (10) abdeckbar ist, **dadurch gekennzeichnet, daß**
- die Klappe (10) mit dem Gehäuse (1) über wenigstens einen Hebel (11) verbunden ist, der an seinem einen Ende um ein erstes im vorderseitigen Bereich des Gehäuses (1) unterhalb der Öffnung (3) angeordnetes Gelenk (12) schwenkbar gelagert ist, daß
- die Klappe (10) an einem an dem zweiten Ende des Hebels (11) vorgesehenen, zweiten Gelenk (13), drehbar gelagert ist, und daß
- Mittel (8,18,31,33) vorgesehen sind, welche beim Öffnen der Klappe (10) die Bewegung der Klappe um das zweite Gelenk (13) derart steuern, daß die Frontseite (15) der Klappe in bezug auf die Vorderseite (2) des Gerätes (1) eine vorbestimmte Ausrichtung erfährt, in der die Frontseite (15) für einen Betrachter sichtbar bleibt und gleichzeitig die Öffnung (3) freigegeben wird.

2. Abspielgerät nach Anspruch 1, **dadurch gekennzeichnet, daß** als Mittel zur Steuerung der Bewegung der Klappe (10) um das zweite Gelenk (13) wenigstens eine an dem Gehäuse (1) angeordnete Kulissen- oder Hebelführung dient, die mit einem an der Klappe vorgesehenen, dritten Gelenk (18,33) zusammenwirkt, wobei das dritte Gelenk (18,33) beim Öffnen der Klappe an der Vorderseite (2) des Gehäuses (1) entlang nach unten geführt wird.

3. Abspielgerät nach Anspruch 2, **dadurch gekennzeichnet, daß** das dritte Gelenk durch wenigstens einen seitlich von einer Seitenwand der Klappe (10) abstehenden Zapfen (18) gebildet wird, der in eine im vorderseitigen Bereich des Gehäuses (1) vorgesehene Kulisse (8) eingreift. (Fig. 1)

4. Abspielgerät nach Anspruch 2, **dadurch gekennzeichnet, daß** als Mittel zur Steuerung der Bewegung der Klappe (10) um das zweite Gelenk (13) ein zweiter Hebel (31) vorgesehen ist, der an seinem einen Ende über das dritte Gelenk (33) mit der Klappe (10) verbunden ist und der an seinem anderen Ende um ein an dem Gehäuse (1) vorgesehenes, viertes Gelenk (32) schwenkbar gelagert ist, wobei das vierte Gelenk (32) im geschlossenen Zustand der Klappe (10) unterhalb des dritten Gelenkes (33) angeordnet ist. (Fig. 2)

5. Abspielgerät nach einem der vorstehenden Ansprüche, **dadurch gekennzeichnet, daß** die Klappe (10) beim Schließen gegen die Spannkraft einer Feder zur Vorderseite (2) des Gehäuses (1) hin geschwenkt wird und im geschlossenen Zustand mittels eines Verriegelungsmechanismus (23,24,25,50,51) arretierbar ist.

6. Abspielgerät nach Anspruch 5, **dadurch gekennzeichnet, daß** wenigstens eine sich an einem Gehäuseteil abstützende Feder (26) vorgesehen ist, die derart auf den wenigstens einen Hebel (11) einwirkt, daß der Hebel (11) beim Schließen der Klappe (10) gegen die Spannkraft der Feder (26) zur Vorderseite (2) des Gerätes (1) hin geschwenkt wird.

7. Abspielgerät nach Anspruch 6, **dadurch gekennzeichnet, daß** ein Ende der Feder (26) an dem Gehäuse (1) festgelegt ist und das andere Ende an einem auf den Hebel (11) einwirkenden, in einer Führung (29) des Gehäuses (1) verschiebbar gelagerten Stangenteil (25) befestigt ist, welches bedingt durch die Spannkraft der Feder (26) ein Schwenken des Hebels (11) um das Gelenk (12) und ein Öffnen der Klappe (10) bewirkt. (Fig. 1)

8. Abspielgerät nach Anspruch 4 und 6, **dadurch gekennzeichnet, daß** eine zweite Feder (36) vorgesehen ist, die mit ihrem einen Ende mit dem zweiten Hebel (31) verbunden ist und mit ihrem anderen Ende an einem Gehäuseteil befestigt ist, und daß der zweite Hebel (31) beim Schließen der Klappe (10) gegen die Spannkraft der Feder (36) bewegt wird. (Fig. 3)

9. Abspielgerät nach Anspruch 5, **dadurch gekennzeichnet, daß** der Verriegelungsmechanismus einen an der Vorderseite (2) des Gehäuses (1) federnden Rasthaken (50) umfaßt, der beim Schließen der Klappe (10) in eine Ausnehmung (55), die an der von der Frontseite (15) der Klappe abgewandten Rückseite (16) der Klappe vorgesehen ist, eindringt und den Rand der Ausnehmung (55) hinterfaßt, und daß eine mit einem auf den Rasthaken (50) einwirkenden Betätigungsmittel (51) verbundene Drucktaste (52) an der Frontseite (15) vorgesehen ist, der bei Betätigung ein Lösen des Rasthakens (50) aus der Ausnehmung (55) und ein Entriegeln der Klappe (10) bewirkt. (Fig. 5)

10. Abspielgerät nach Anspruch 5 und 7, **dadurch gekennzeichnet, daß** der Verriegelungsmechanismus ein mit dem Gehäuse (1) verbundenes, federndes Sperrglied (24) umfaßt, dessen freies Ende mit einem ersten Rastmittel (27) versehen ist, das in ein an dem von dem Hebel (11) abgewandten Ende des Stangenteils (25) vorgesehenes zweites Rastmittel (28) einfaßt, sowie einen auf das Sperrglied (24) einwirkenden Elektromagneten (23) umfaßt, der durch einen an dem Gehäuse (1) vorgesehenen, elektrischen Schalter (21) betätigbar ist, wobei eine Betätigung des Elektromagneten (23) bewirkt, daß das erste Rastmittel (27) aus dem zweiten Rastmittel (28) ausrastet und das Stangenteil (25) freigegeben wird. (Fig. 1)

## Claims

1. Player for recording media, comprising a housing (1) with a front side (2), in which an opening (3) is provided, into which opening a recording medium (7) can be inserted, the opening being able to be covered by a pivotable flap (10) which is provided with a front side (15), **characterized in that**
- the flap (10) is connected to the housing (1) by means of at least one lever (11), which is pivotably mounted at its one end about a first joint (12) arranged in the front region of the housing (1) underneath the opening (3), **in that**
- the flap (10) is rotatably mounted at a second joint (13), which is provided at the second end of the lever (11), and **in that**
- means (8, 18, 31, 33) are provided, which means control the movement of the flap about the second joint (13) during the opening of the flap (10) in such a way that the front side (15) of the flap undergoes a predetermined alignment with respect to the front side (2) of the player (1) in which the front side (15) remains visible for a viewer and at the same time the opening (3) is exposed.

2. Player according to Claim 1, **characterized in that** at least one slotted-link or lever guide serves as the means for controlling the movement of the flap (10) about the second joint (13), which guide interacts with a third joint (18, 33), provided on the flap, the third joint (18, 33) being guided downwards along the front side (2) of the housing (1) during the opening of the flap.

3. Player according to Claim 2, **characterized in that** the third joint is formed by at least one pin (18), which protrudes laterally from a side wall of the flap (10) and engages in a slotted link (8) provided in the front region of the housing (1). (Figure 1)

4. Player according to Claim 2, **characterized in that** a second lever (31) is provided as the means for controlling the movement of the flap (10) about the second joint (13), which lever is connected at its one end to the flap (10) via the third joint (33) and is pivotably mounted at its other end about a fourth joint (32), which is provided on the housing (1), the fourth joint (32) being arranged underneath the third joint (33) in the closed state of the flap (10). (Figure 2)

5. Player according to one of the preceding claims, **characterized in that**, during closing, the flap (10) is pivoted against the tension of a spring towards the front side (2) of the housing (1) and can be arrested in the closed state by means of a locking mechanism (23, 24, 25, 50, 51).

6. Player according to Claim 5, **characterized in that** at least one spring (26) is provided, which spring supports itself on a housing part and acts on the at least one lever (11) in such a way that the lever (11) is pivoted against the tension of the spring (26) towards the front side (2) of the player (1) during the closing of the flap (10).

7. Player according to Claim 6, **characterized in that** one end of the spring (26) is fixed to the housing (1) and the other end is fastened to a rod part (25) which acts on the lever (11), is displaceably mounted in a guide (29) of the housing (1) and is caused by the tension of the spring (26) to bring about pivoting of the lever (11) about the joint (12) and opening of the flap (10). (Figure 1)

8. Player according to Claims 4 and 6, **characterized in that** a second spring (36) is provided, which spring is connected by its one end to the second lever (31) and is fastened by its other end to a housing part, and **in that** the second lever (31) is moved against the tension of the spring (36) during the closing of the flap (10). (Figure 3)

9. Player according to Claim 5, **characterized in that** the locking mechanism comprises a latching hook (50), which is resiliently mounted on the front side (2) of the housing (1) and, during closing of the flap (10) penetrates into a recess (55), which is provided on the rear side (16) of the flap remote from the front side (15) of the flap, and engages behind the edge of the recess (55), and **in that** a pushbutton (52), which is connected to actuating means (51) acting on the latching hook (50), is provided on the front side (15) and, when actuation occurs, brings about a release of the latching hook (50) from the recess (55) and an unlocking of the flap (10). (Figure 5)

10. Player according to Claims 5 and 7, **characterized in that** the locking mechanism comprises a resilient blocking element (24), which is connected to the housing (1) and the free end of which is provided with a first latching means (27), which engages in a second latching means (38), provided at the end of the rod part (35) remote from the lever (11), and also an electromagnet (23), which acts on the blocking element (24) and can be actuated by an electric switch (21) provided on the housing (1), an actuation of the electromagnet (23) causing the first latching means (27) to disengage from the second latching means (28) and the rod part (25) to be released. (Figure 1)

## Revendications

1. Lecteur pour des supports d'enregistrement, comprenant un boîtier (1) muni d'une face avant (2) avec une ouverture (3) dans laquelle on peut introduire un support d'enregistrement (7), l'ouverture pouvant être recouverte par un volet (10) pivotant pourvu d'une face frontale (15),
**caractérisé en ce que**
- le volet (10) est relié au boîtier (1) par l'intermédiaire d'au moins un levier (11) monté de façon à pouvoir pivoter à l'une de ses extrémités autour d'une première articulation (12) disposée dans la zone frontale du boîtier (1) au-dessous de l'ouverture (3),
- le volet (10) est monté de façon à pouvoir tourner sur une deuxième articulation (13) prévue à la deuxième extrémité du levier (11) et
- on prévoit des moyens (8, 18, 31, 33) qui, lorsque le volet (10) s'ouvre, commandent le mouvement du volet autour de la deuxième articulation (13) de telle sorte que la face frontale (15) du volet acquiert par rapport à la face avant (2) de l'appareil (1) une orientation prédéterminée selon laquelle la face frontale (15) reste visible pour un observateur et l'ouverture (3) est en même temps libérée.

2. Lecteur selon la revendication 1,
**caractérisé en ce qu'**
au moins un guidage par coulisse ou par levier disposé sur le boîtier (1) sert de moyen pour commander le mouvement du volet (10) autour de la deuxième articulation (13) et agit conjointement avec une troisième articulation (18, 33) prévue sur le volet, la troisième articulation (18, 33) étant guidée vers le bas le long de la face avant (2) du boîtier (1) lorsque le volet s'ouvre.

3. Lecteur selon la revendication 2,
**caractérisé en ce que**
la troisième articulation est formée par au moins un pivot (18) qui fait latéralement saillie sur une paroi latérale du volet (10) et qui s'encliquette dans une coulisse (8) prévue dans la zone avant du boîtier (1) (figure 1).

4. Lecteur selon la revendication 2,
**caractérisé en ce que**
comme moyen pour commander le mouvement du volet (10) autour de la deuxième articulation (13), on prévoit, un deuxième levier (31) qui est relié au volet (10) par l'intermédiaire de la troisième articulation (33) à l'une de ses extrémités et qui à l'autre extrémité est monté de façon à pouvoir pivoter autour d'une quatrième articulation (32) prévue sur le boîtier (1), la quatrième articulation (32) étant disposée au-dessous de la troisième articulation (33) lorsque le volet (10) est fermé (figure 2).

5. Lecteur selon l'une des revendications précédentes,
**caractérisé en ce que**
lorsqu'il se ferme, le volet (10) est basculé vers la face avant (2) du boîtier (1) en s'opposant à la force élastique d'un ressort et
à l'état fermé il peut être bloqué à l'aide d'un mécanisme de verrouillage (23, 24, 25, 50, 51).

6. Lecteur selon la revendication 5,
**caractérisé en ce qu'**
on prévoit au moins un ressort (26) qui s'appuie sur une partie du boîtier et qui agit sur le levier (11) au moins au nombre d'un de telle sorte que, lorsque le volet (10) se ferme, le levier (11) est basculé vers la face avant (2) du boîtier (1) en s'opposant à la force élastique du ressort (26).

7. Lecteur selon la revendication 6,
**caractérisé en ce qu'**
une des extrémités du ressort (26) est immobilisée sur le boîtier (1) et l'autre extrémité est fixée à une partie de tige (25) qui agit sur le levier (11) et est montée de façon à pouvoir se déplacer dans un guidage (29) du boîtier (1) et qui fait que, sous l'effet de la force élastique du ressort (26), le levier (11) bascule autour de l'articulation (12) et que le volet (10) s'ouvre (figure 1).

8. Lecteur selon les revendications 4 et 6,
**caractérisé en ce qu'**
on prévoit un deuxième ressort (36) qui est relié au deuxième levier (31) par l'une de ses extrémités et fixé à une partie du boîtier par l'autre extrémité, et le deuxième levier (31) est déplacé en s'opposant à la force élastique du ressort (36) lorsque le volet (10) se ferme (figure 3).

9. Lecteur selon la revendication 5,
**caractérisé en ce que**
le mécanisme de verrouillage comprend un crochet de blocage (50) élastique, situé sur la face avant (2) du boîtier (1), qui lorsque le volet (10) se ferme pénètre dans un creux (55) prévu sur la face arrière (16) du volet opposée à la face frontale (15) du volet et qui saisit par l'arrière le bord du creux (55) et
on prévoit sur la face frontale (15) une touche (52) reliée à un moyen de manoeuvre (51) qui agit sur le crochet de blocage (50) et lorsqu'on la manoeuvre elle fait que le crochet de blocage (50) sort du creux (55) et que le volet (10) se déverrouille.

10. Lecteur selon les revendications 5 et 7,
**caractérisé en ce que**
le mécanisme de verrouillage comprend
- un organe d'arrêt (24) élastique, relié au boîtier (1), dont l'extrémité libre est munie d'un premier moyen de blocage (27) qui s'encliquette dans un deuxième moyen de blocage (28) prévu à l'extrémité - opposée au levier (11) - de la partie de tige (25),
- ainsi qu'un électroaimant (23) qui agit sur l'organe d'arrêt (24) et qu'on peut manoeuvrer par un commutateur électrique (21) prévu sur le boîtier (1), une manoeuvre de l'électroaimant (23) faisant que le premier moyen de blocage (27) se débloque du deuxième moyen de blocage (28) et que la partie de tige (25) est libérée (figure 1).
